# EUROPEAN PATENT SPECIFICATION

(11) **EP 1 591 189 B1**
(45) Date of publication and mention of the grant of the patent: **23.03.2011**
(21) Application number: 04101773.2
(22) Date of filing: 27.04.2004
(51) Int. Cl.: B23K 26/067, B23K 26/10

(54) **Method for operating an automated laser machining system and automated laser machining system**
Verfahren zum Betreiben eines automatisierten Laserbearbeitungssystems und automatisiertes Laserbearbeitungssystem
Méthod pour faire fonctionner un système automatisé d'usinage laser et système automatisé d'usinage laser

(43) Date of publication of application: 02.11.2005
(73) Proprietor: Fanuc Robotics Europe S.A., 6468 Echtemach (LU)
(72) Inventor: Ramsden, Nigel, 6950 Olingen (LU)
(74) Representative: Office Freylinger

(56) References cited:
- EP-A- 0 607 456
- WO-A-2004/014594

## Description

### INTRODUCTION

The present invention relates to a method for operating an automated laser machining system according to the preamble of claim 1 and to an automated laser machining system according to the preamble of claim 12, and in particular to the use of multi-axis articulated robots for laser welding and laser cutting. WO 2004/014594 describes such a method and such an automated laser machining system.

Automated equipment performing laser machining operations, in particular laser welding and laser cutting, has become an established technology in various industrial applications, replacing in particular electrical resistance welding and gas welding. Particularly suitable for three-dimensional machining of parts with complex shapes, e.g. in the automotive industry, are multi-axis articulated robots due to their positioning and rotational capabilities.

Even though laser machining has become a popular technique the laser producing resources required for laser machining, e.g. YAG or CO2 resonators, demand substantial investments. Thus there is a need to efficiently utilize the laser resource. In this context it is known to provide multiple fixtures for a given robot, such that while loading a new workpiece and unloading a finished workpiece, the same robot continues laser machining on a different workpiece.

Another approach is to switch the laser beam between robots on different workstations, in such a way that at the end of a work cycle at a given workstation, during the time required to unload the finished part and load another part to be machined on this workstation, the laser is switched to another workstation which then performs its work cycle.

WO 2004/014594 describes a laser welding method for the production of a vehicle body. Two robot arms are provided with respective laser machining tools in order to produce step weld joints on the vehicle body. A laser beam is transmitted in turn to one or the other of the machining tools as they follow their respective work paths to perform their machining processes. While the laser beam is being transmitted to one of the machining tools to perform a machining process at a given machining location, the other of the two machining tools is moved to a next machining location..

### OBJECT OF THE INVENTION

The object of the present invention is to provide an improved method for operating an automated laser machining system and an automated laser system, which permit an efficient use of the laser source" This is achieved by a method as claimed in claim 1, respectively by an automated laser machining system as claimed in claim 12.

### GENERAL DESCRIPTION OF THE INVENTION

The present invention relates to a method for operating an automated laser machining system comprising at least two laser machining tools each mounted on a respective robot arm to be moveable around at least one workpiece to perform laser machining processes thereon, as well as a laser source delivering a laser beam to be used by the laser machining tools. In the present method, the robot arms are concurrently operated to move each of the laser machining tools along respective predetermined work paths to perform a plurality of machining processes at predetermined machining locations.

According to the present invention, the laser beam is shared by the machining tools in such a way that the laser beam is transmitted in turn to one or the other of the machining tools (one at a time) as they follow their respective work paths to perform their machining processes. Furthermore, while the laser beam is being transmitted to one of the machining tools to perform a machining process at a given machining location, the other machining tool is moved to a next machining location along its respective work path..

Hence, in the method of the invention, the laser beam is shared between the machining tools as they are concurrently following their work paths, i.e. during their work cycles. Indeed, in the present method the machining tool operation and the laser sharing are controlled in such a way that during the time a machining tool is moved between two machining locations, the laser beam which is of no use at this machining tool, is used by another machining tool in the system to perform a laser machining process. This permits a very efficient use of the laser source.. It will be appreciated that the present method results in a greatly improved laser utilisation, in particular in comparison to conventional laser beam management, where the laser beam is not used at all while a laser machining tool is being moved between two consecutive machining locations during a given work cycle.

This optimisation of the laser source utilisation also allows to secure a given production without requiring additional laser resources, or to increase production throughput of a given laser machining system.

The present method can advantageously be implemented to optimally operate a laser machining system adapted to carry out laser machining processes such as laser welding and laser cutting. A particular field of application of such machining processes is the automotive industry, in particular for body shop applications, in which case the workpiece typically is a part of a vehicle body. In the case of laser welding, the workpiece may be a vehicle body part consisting of an assembly of two or more elements to be welded together.

It will be understood that the laser beam switching is preferably triggered at predetermined moments, that will depend on the particularities of the work paths of the machining tools. For example, if the system comprises two machining tools that have relatively similar work paths with about the same number of machining processes to be carried out, the laser may be alternately transmitted to either of the machining tools. Specifically, while the laser beam is being transmitted to a first machining tool to perform a machining process at a given machining location, the second machining tool is moved to its next machining location. At the end of the machining process carried out by the first machining tool, the laser beam is switched to the second machining tool to perform its machining process. In the mean time, the first machining tool is moved to its next machining location, and the laser beam is then switched to the first machining tool as soon as the second machining tool finishes its machining process at the given machining location. This alternate switching is carried out as long as the machining tools are concurrently operating.

If at some point in the work path of e.g. the first machining tool the travel distance between two consecutive machining locations is particularly long, the laser may be used by the second machining tool to perform two consecutive machining operations. In such a case, the laser beam will simply be turned off at the second machining tool as it is moved between the two machining locations. Alternatively, if such situations occur frequently for a certain workpiece, a third robot arm with machining tool may be operated concurrently with the first and second robot arms.

In most applications, the welds or cuts to be performed on a workpiece will generally have to be carried out over a predetermined distance. Therefore, the machining locations shall correspond to portions of the work paths, along which the machining tools are moved during machining processes. In most welding applications, the machining locations will take the form of linear or curvilinear segments. This permits to have corresponding machining locations (i.e. welding seams or cuts) on the workpiece itself taking the form of linear or curvilinear segments.

Preferably, a given laser machining operation is carried out at a predetermined speed, that is determined from various parameters such as laser intensity and material to be processed.

Furthermore, the robot arms operation is preferably controlled in such a way that, while a first machining tool, to which the laser beam is transmitted to perform a machining process, is moved along a machining location by its respective robot arm at a predetermined speed, the displacement speed of the other machining tool is adapted so that it reaches the next machining location on its respective work path essentially at the moment when the former machining tool terminates its machining process. In other words, the travelling speed of the machining tool (due to robot operation) that is moving between two machining locations is adapted in function of the time available for this displacement, so that this machining tool is ready for performing a machining process as soon as the other machining tool has finished its machining process and the laser beam is available.

The laser sharing is controlled in such a way that, as soon as one laser machining tool terminates its machining process, the laser beam is switched to a machining tool that reaches a next machining location. In this connection, it will however be noted that, depending on the technology used to carry out the laser beam switching operation, such a switching may cause a temporary laser beam interruption. In such a case, at the time of switching the laser beam from a machining tool terminating its machining process to a machining tool reaching a next machining location, this temporary laser beam interruption is taken into account to adapt the displacement speed of the machining tool reaching its next welding location so that the laser beam is available for the machining tool at the moment it actually reaches the next machining location.

For an improved operation of the laser machining system, the operation of the robot arms, the control of the machining tools as well as the laser sharing is advantageously controlled according to a single computer-controlled process. Although there may be two or more robot arms, this allows to control the whole system as if it consisted of one robot with two or more arms. In practice, this may be achieved through the programming of the computer-controlled process, by using a single instruction that commands both robot arms to effect the displacement of these robot arms to respective given positions. Since the robot arms and the laser switching are controlled as a single process, there is no need to provide complex coordination between separate robot controllers, because the control of a single process provides an intrinsic synchronization. In addition, this kind of robot control avoids any risk of collision between the robot arms. In particular, the occurrence of a failure at one robot arm will normally stop the whole system immediately.

The present method can be implemented to perform machining processes on a variety of workpieces, as the use of robot arms permits a great laser positioning and orienting capability. This also implies that the work paths and machining locations along the work paths may vary greatly depending on the work pieces and machining processes to be carried out.

Typically, the machining tools may be operated along distinct work paths, on different portions of the workpiece. However, two machining tools could alternatively be guided along two identical, complementary or overlapping work paths.

It remains to be noted that the present method can be easily implemented to control a variety of automated machining systems, as long as they are provided with laser switching means capable of selectively transmitting the laser beam to one of the machining tools at a time. This also means that existing automated laser machining system can easily be controlled in accordance with the present method, if required after installation of laser switching means.

According to another aspect of the invention, an automated laser machining system comprises a laser source delivering a laser beam and at least two laser machining tools each mounted on a respective robot arm. The system further comprises laser beam transmitting and switching means for selectively transmitting the laser beam to one of the laser machining tools at a time and control means designed to operate the at least two robot arms to move the machining tools along respective predetermined work paths to perform a plurality of laser machining processes at predetermined machining locations. It will be appreciated that the control means are further designed to control the switching of the laser beam so that it is shared by the at least two machining tools in such a way that the laser beam is transmitted in turn to one or the other of the at least two machining tools. This controlled switching is carried out while they concu r-rently follow their respective work paths to perform their machining processes. Herein the laser beam is being transmitted to one of the machining tools to perform a machining process at a given machining location while the other of the at least two machining tools is moved to a next machining location along its respective work path.

Preferably the robot arms carrying the machining tools are arranged around at least one workpiece so as to form a workstation and the system comprises holding means for holding the at least one workpiece. Working with multiple machining tools on a workpiece increases productivity since the machining processes can be achieved in shorter time. Furthermore, the robot arms may be arranged so as to have at least partially overlapping ranges of movement.

In practice the system preferably consists of standard multi-joint articulated robot arms. Hence, in combination with available laser sources, and conventional machining tools an improved productivity is obtained without the need of specialized equipment or extra expenditure.

For performing laser welding, e.g. stitch welding, the machining tools are laser welding heads comprising laser focusing means. Alternatively for performing laser cutting, the machining tools are laser cutting heads comprising laser focusing means. Advantageously the machining tools are removably mounted to the robot arms, so as to enable the selection of adapted machining tools in view of welding or cutting, using the same automated laser machining system.

In a preferred embodiment the control means, i.e. a controller unit, comprises a microprocessor unit for running a control program. In this way a software program can be programmed and parameterised on the controller, so as to adapt its control function as desired according to different kinds of machining processes and workpieces. Furthermore, the control means preferably comprises servo amplifiers for operating the robot arms. In this way the robot arms can be controlled and powered by a single control unit.

In practice, especially when applying YAG laser technology, the laser beam transmitting and switching means preferably comprise fibre optic cables connecting the laser source to the machining tools with an interposed optical switch for transmitting the laser beam alternately to either one of the machining tools.

### BRIEF DESCRIPTION OF THE DRAWINGS

The present invention will be more apparent from the following description of a not limiting embodiment with reference to the attached drawings, wherein
Fig.1: is a schematic view of a laser machining system for application of the method according to the present invention;
Fig.2: is a top view of an example workpiece with an illustration of work paths and machining locations;
Fig.3: is a work path travel graph corresponding to the example of Fig. 2; and
Fig.4: is a velocity and laser utilization graph corresponding to the example of Fig. 2.

### DETAILED DESCRIPTION OF PREFERRED EMBODIMENTS

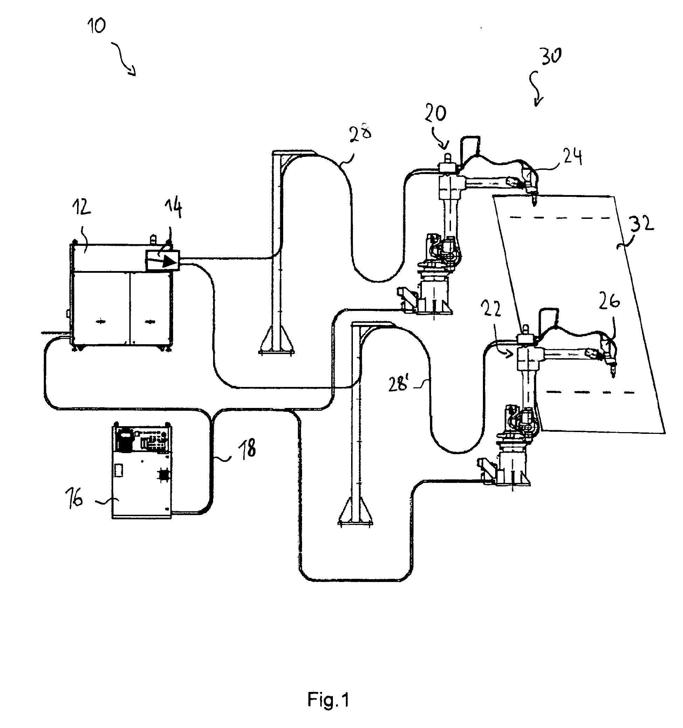

A preferred embodiment of the present method will now be explained in more detail with reference to a preferred automated laser machining system illustrated in Fig. 1.

As shown in Fig. 1, a preferred automated laser machining system 10 comprises a laser source 12 and a laser switching element 14 integrated therein. A controller unit 16 is connected by means of cables 18 to a first robot arm 20 and to a second robot arm 22 respectively and to the laser source 12. In a manner known per se, both robot arms 20, 22 consist of similar standard articulated arms preferably having six degrees of freedom, i.e. six rotational axes defined by six articulated joints. It is however clear that the robot arms need not be of similar type and may have various and different degrees of freedom. Furthermore, although in this embodiment the laser machining process to be performed is the so-called "stitch welding" process, other laser machining processes are not excluded.

Stitch welding is a popular alternative to electrical resistance spot welding and basically consists in carrying out longitudinal linear seam welds of a length generally in the order of 10 mm to 40 mm. A first machining tool or welding head 24 is mounted to the outermost member of the first robot arm 20 and a second machining tool or welding head 26 is mounted to the outermost member of the second robot arm 22. These welding heads 24 and 26 are provided with focusing means to focus a laser beam on the surface of a workpiece at a machining location.

In Fig. 1, the first and second robot arms 20, 22 are arranged at a single workstation 30. Furthermore, both robot arms 20, 22 are disposed at the workstation 30 so as to have a workpiece 32 within their respective range of motion. As required for welding workpieces of complex geometry, six-axes articulated arms provide high flexibility for positioning and for orientation of the welding heads 24, 26.

The laser source 12, e.g. based on YAG technology, generates a laser beam (not shown) that is transmitted in the system 10 by means of fibre optic cables 28 and 28'. More precisely, the laser beam generated by the laser source 12 enters the switching element 14, which is connected by cables 28, respectively 28', to the first and second welding heads 24, 26 respectively. It is to be noted that the switching element 14 is designed so that the laser beam can be selectively transmitted to either the first welding head 24 or the second welding head 26 depending on the setting of the switching element 14. This means that the switching element 14 does not split the laser beam, but transmits all of the available laser beam power to the selected welding head 24 or 26. Thus the laser beam is in fact only available at one welding head at a time.

Operation of the system 10 is controlled by the controller unit 16, which is designed so as to operate the robot arms 20 and 22, welding heads 24 and 26 and switching element 14 in accordance with the present method. Accordingly, the controller unit 16 concurrently operates the first robot arm 20 and second robot arm 22 to perform a given plurality of stitch welds. The controller 16 commands the first and second robot arms 20, 22 jointly so that they guide their respective welding heads 24, 26 along their respective, predetermined work paths. These work paths are determined for each robot arm 22, 24 according to the desired machining locations on the workpiece 32, i.e. the form and position of the stitch welds. It will be appreciated that according to the present method, the laser is shared in turn between the two welding heads 24 and 26 in such a way that during the time required for one welding head to perform a weld along a given location (during which the laser beam is not available for the other welding head), the other welding head is moved from the end of a previous welding location to the beginning of a next welding location.

Furthermore, in coordination with the movement of the robot arms 20, 22, the controller unit 16 controls the moment of switching the laser beam to either the first or the second welding head 24, 26 in order to carry out a new stitch weld at the correct location.

In the conventional practice, when a given welding head is moved by a robot arm between two consecutive welding locations, the laser beam is simply not used, which results in considerable loss of laser activity. It will thus be appreciated that the present method eliminates such laser off times, as the laser is used by another welding head in the system. As a result, the present method allows an efficient utilisation of the laser source.

The controller unit 16 is preferably equipped with a processing unit, a controller board and servo amplifiers (not shown). The processing unit advantageously runs a software program in accordance with the present method. Specifically, the operation/movement of the robot arms is preferably carried out by program instructions that permit to jointly command both robot arms. A given displacement of both robot arms 20, 22 to new positions is thus carried out by a si ngle program instruction grouping together the target coordinate data relative to both arms. In this way the physical separation of the robot arms 20, 22 is masked, so as to enable control of a single "dual-arm robot" with double the degrees of freedom. It will be appreciated that this approach allows intrinsic collision avoidance and eliminates the need of synchronization between separate robots.

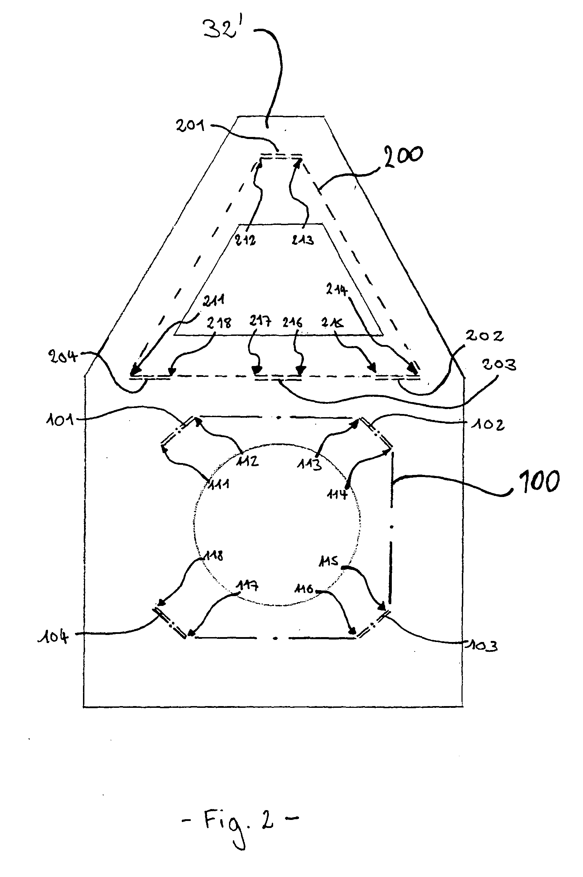

An example of implementation of the present method will now be explained with regard to Figs. 2-4, wherein the method is applied to laser machining of an example workpiece 32' illustrated in Fig.2. Prior to being subjected to a set of machining processes, the workpiece 32', generally consisting of two or more separate parts clamped together, is loaded on the workstation 30. To illustrate the sequence of operation of the first and second robot arms 20, 22, the projected work path 100 of the first welding head 24 and the projected work path 200 of the second welding head 26 are shown in different line styles in Fig.2. In fact, the projected work path shows the path of the focused laser beam on the workpiece surface if the laser beam was permanently emitted by the welding head. In the following, reference will indifferently be made to the work path or the projected work path, as they are related.

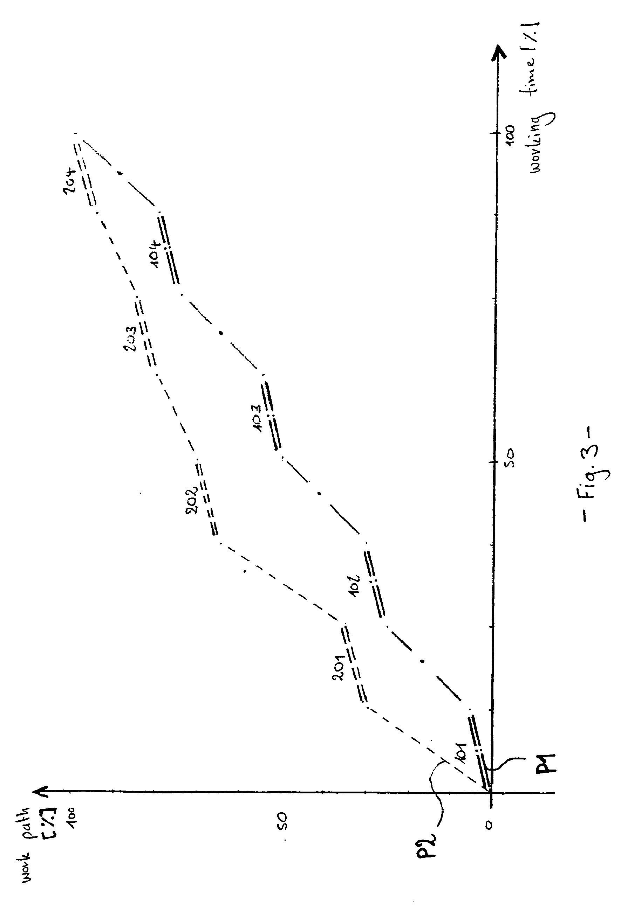

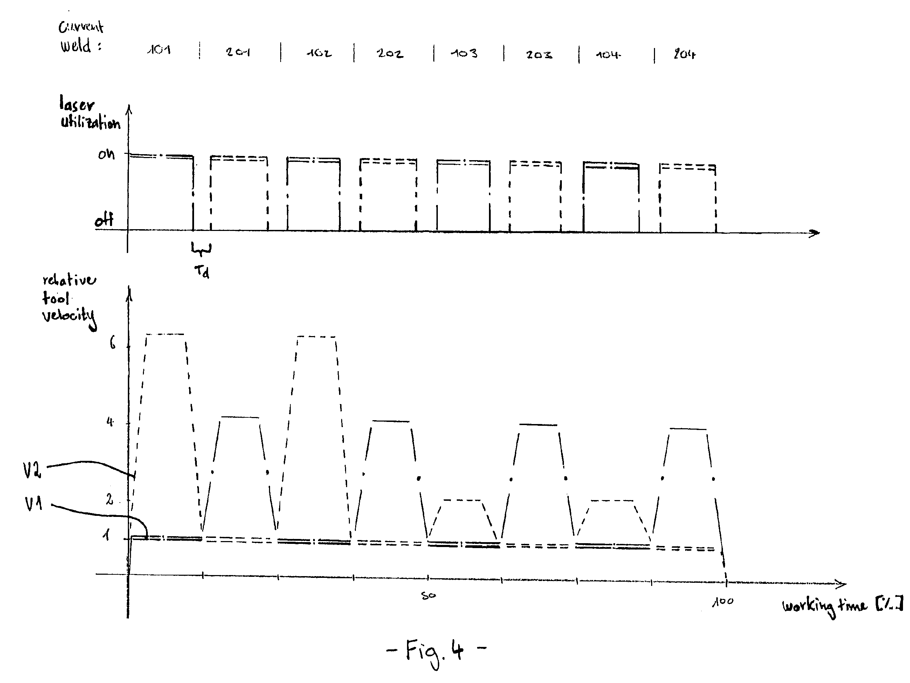

The work paths 100 and 200 are preferably determined so as to allow, respectively, simultaneous welding and repositioning of the welding heads 24, 26 without unnecessary laser off time. In the present example, the first welding head 24 performs a first group of stitch welds 101, 102, 103, 104 along its work path 100 and the second welding head 26 performs a second group of stitch welds 201, 202, 203, 204 along its work path 200. The percentage of compl e-tion of the work path (or work cycle) for each welding head is plotted as a function of working time (in fact the time required to complete the work cycles) in Fig.3. Reference P1 indicates the work path of the first welding head 24 and P2 the work path of the second welding head 26. In Fig.4 a tool velocity graph shows the respective speeds of both welding heads 24, 26 as they follow their respective work paths. Fig.4 also shows a graph illustrating the laser utilisation as a function of working time.

In Figs. 2-4 each work path is indicated by a separate line style (dashed line for the first welding head 24 and mix line for the second welding head 26) and double lines indicate the machining locations, i.e. the stitch welds 101, 102, 103, 104 and 201, 202, 203, 204 located along the respective work paths 100 and 200. As it will appear from Figs. 2 and 3, in the present embodiment the stitch welds 101, 102, 103, 104, 201, 202, 203 and 204 are all of same length. The distances of displacement between the welds are identical for the first welding head 24 whereas the distances vary for the second welding head 26. It will however be appreciated that the present method can readily be applied to any form and distribution of a plurality of machining processes on a workpiece. For simplicity, the stitch welds shall be referred to as welds, and the laser welding beam as beam.

After initialisation of the software program, first and second robot arms 20, 22 are positioned so as have their respective laser welding heads 24, 26 pointing to starting positions 111 and 211 respectively. To start the machining process, the beam is switched to the first welding head 24 to perform weld 101. During this welding the control unit 16 operates the first robot arm 20 to guide the first welding head 24 pointing the beam from positions 111 to 112 at a predefined, constant welding speed (e.g. 0,175 m/s). As best seen in Fig. 4 each weld is performed at constant speed. Concurrently to welding with the first robot arm, the control unit 16 operates the second robot arm 22 so as to move the second welding head 26 from position 211 pointing to position 212. Herein the second robot arm 22 will have an adapted velocity pattern to reach position 212 when the first welding head 24 finishes weld 101, as shown in Fig. 4. The second robot arm 22 reaches constant welding speed before the beam is available. Thus when the second welding head 26 points to position 212 (i.e. the laser head is positioned so that an emitted laser beam would meet the workpiece surface at point 212) the beam is switched to the second welding head 26. Alternatively, in the beginning of the machining processes, the approach path can be designed so that the second robot arm has its welding head 26 directly pointing at starting position 212 and wait for the first robot arm 20 to finish weld 101.

While the second robot arm 22 performs weld 201, the controller unit 16 operates the first robot arm 20 with appropriate acceleration, velocity and deceleration so that the first welding head 24 reaches the next weld 102 in proper time, see Fig. 3 and Fig. 4. When the second welding head 26 points to position 213, weld 201 is finished. At this moment, in order to perform weld 102, the beam is switched to the first welding head 24, which has then reached the required predetermined welding speed above position 113.

As seen in Fig. 3 and Fig. 4, the first welding head performs weld 102 while the controller unit 16 moves the second arm 22 to reach the next weld 202 in proper time. When the first welding head 24 points to position 114, weld 102 is finished. At the same time, in order to perform weld 202, the beam is switched to the second welding head 26, which has then reached constant welding speed above position 214.

In similar fashion to what is described above, and with reference to Figs. 2-4, when the second welding head 26 performs weld 202, the first robot arm 20 is operated to move the first welding head along the path portion from 114 to 115. The same procedure applies to the operation of the first and second robot arms 20, 22 respectively, for weld 103 and path portion from 215 to 216, for path portion from 116 to 117 and weld 203, for weld 104 and path portion from 217 to 218.. When weld 104 is finished, the work path of the first welding head is terminated and the robot arm 20 removes the welding head 24 from the working area according to a leave path (not shown). Concurrently, weld 204 is performed by the second welding head 26, after which the robot arm 22 removes the welding head 24 from the working area according to a leave path (not shown). The machining processes are finished on the current workpiece 32' and the work cycles are thus completed.

In order to perform the displacements between the welds within the time frame of a welding process, and in order to reach constant welding speed, the first robot arm 20, respectively the second robot arm 22, is operated with phases of acceleration, constant velocity and deceleration as shown in Fig. 4. Preferably, there are no abrupt transitions between these phases.

Fig. 3 shows how while one of the robot arms 20, 22 is performing a weld, at the same time the other robot arm 20, 22 moves its respective welding head 24, 26 to the next welding location. In this regard, it will be noted that in the present method, a travelling robot arm 20, resp. 22 is preferably operated with an adapted velocity pattern to reach its next machining position, in time or before the other robot arm 22, resp. 20, finishes its current machining operation. As best shown in Fig. 4, the velocity patterns V1, V2, with adapted acceleration and deceleration phases, depend on the configuration of start/end positions 11i, 21i of the machining locations. Herein the software program preferably calculates the required respective patterns and also the beam switching so as to allow simultaneous, alternated laser machi ning and moving along the work paths 100, 200. The software program can perform these calculations by means of previous teaching of the mere set of positions 11i, 21 i and orientations for both robot arms 20, 22. Preferably, the only additional information is the time required for a given machining process, e.g. welding or moving.

The laser utilization graph in Fig. 4 shows the extent of utilization of the laser source. The laser is alternatively switched and delivered for effective machining to either the first or second robot arm 20, 22. The laser beam performs machining operations during all, but the switching delay time Td (i.e. the time required to switch the laser beam from one welding head to the other).

It will be appreciated that, except for the off time due to the switching delay, the laser beam has been utilized for machining to the most possible extent.

## Claims

1. Method for operating an automated laser machining system, said laser machining system comprising at least two laser machining tools (24, 26) each mounted on a respective robot arm (20, 22) and being moveable around at least one workpiece (32, 32') to perform laser machining processes thereon, and a laser source (12) delivering a laser beam to be used by said laser machining tools (24, 26), said method comprising:
concurrently operating said robot arms (20, 22) to move each of said laser machining tools (24, 26) along respective predetermined work paths (100, 200) to perform a plurality of machining processes at predetermined machining locations;
wherein said laser beam is shared by said at least two machining tools (24, 26) in such a way that said laser beam is transmitted in turn to one or the other of said at least two machining tools (24, 26) as they follow their respective work paths (100, 200) to perform their machining processes, and wherein, while said laser beam is being transmitted to one of said machining tools (24, 26) to perform a machining process at a given machining location, the other of said at least two machining tools (24, 26) is moved to a next machining location along its respective work path (100, 200);
**characterized in that**
as soon as one laser machining tool (24, 26) terminates its machining process, said laser beam is switched to the other of said at least two machining tools (24, 26) that reaches a next machining location; and
**in that** at the time of switching said laser beam from a machining tool (24, 26) terminating its machining process to a machining tool (24, 26) reaching a next machining location, the temporary laser beam interruption caused by switching said laser beam from one to the other of said at least two laser machining tools (24, 26) is taken into account to adapt the displacement speed of said machining tool (24, 26) reaching its next machining location so that said laser beam is available at said machining tool (24, 26) at the moment it reaches said next machining location.

2. Method according to claim 1, **characterised in that** said laser beam is alternately transmitted to each of said machining tools (24, 26)..

3. Method according to claim 1 or 2, **characterised in that** said machining locations correspond to portions of said work paths (100, 200), said machining tools (24, 26) being moved along said machining locations during machining processes..

4. Method according to claim 3, **characterised in that** said machining locations are linear or curvilinear segments.

5. Method according to any one of the preceding claims, **characterised in that**, while one of said machining tools (24, 26) to which said laser beam is being transmitted to perform a machining process is moved along a machining location by its respective robot arm (20, 22) at a predetermined speed, the displacement speed of the other machining tool (24, 26) is adapted so that it reaches the next machining location on its respective work path essentially at the moment when the former machining tool terminates its machining process.

6. Method according to any one of the preceding claims, **characterised in that** the operation of said robot arms (20, 22) and the control of said machining tools (24, 26) as well as said laser sharing is controlled according to a single computer-controlled process.

7. Method according to claim 6, **characterised in that** single instructions to said computer-controlled process jointly command the robot arms (20, 22).

8. Method according to any one of claims 1 to 7, **characterised in that** said machining tools (24, 26) are operated along respective work paths (100, 200) on different portions of said workpiece (32, 32').

9. Method according to any one of the preceding claims, **characterised in that** said machining tools (24, 26) are operated along identical, complementary or partially overlapping work paths.

10. Method according to any one of the preceding claims, **characterised in that** said laser machining process is a laser welding process or a laser, cutting process..

11. Method according to any one of the preceding claims, **characterised in that** said workpiece (32') is an assembled vehicle body part.

12. Automated laser machining system comprising:
a laser source (12) delivering a laser beam;
at least two laser machining tools (24, 26) each mounted on a respective robot arm (20, 22);
laser beam transmitting and switching means for selectively transmitting said laser beam to one of said laser machining tools (24, 26); and
control means (16) designed to operate said at least two robot arms to move said machining tools along respective predetermined work paths to perform a plurality of laser machining processes at predetermined machining locations,
wherein said control means are further designed to control the switching of said laser beam so that it is shared by said at least two machining tools (24, 26) in such a way that said laser beam is transmitted in turn to one or the other of said at least two machining tools as they concurrently follow their respective work paths (100, 200) to perform their machining processes, and
while said laser beam is being transmitted to one of said machining tools (24, 26) to perform a machining process at a given machining location, the other of said at least two machining tools is moved to a next machining location along its respective work path
**characterized in that**
said control means is designed so that as soon as one laser machining tool (24, 26) terminates its machining process, said laser beam is switched to the other of said at least two machining tools that reaches a next machining location; and
so that at the time of switching said laser beam from a machining tool (24, 26) terminating its machining process to a machining tool reaching a next machining location, the temporary laser beam interruption caused by switching said laser beam from one to the other of said at least two laser machining tools (24, 26) is taken into account to adapt the displacement speed of said machining tool reaching its next machining location so that said laser beam is available at said machining tool at the moment it reaches said next machining location.

13. System according to claim 12, wherein said robot arms (20, 22) are arranged around at least one workpiece (32, 32') so as to form a workstation (30) and wherein said system comprises holding means for holding said at least one workpiece (32, 32').

14. System according to claim 12 or 13, wherein said robot arms (20, 22) are multi-joint articulated robot arms.

15. System according to any of claims 12 to 14, wherein said robot arms (20, 22) are arranged so as to have at least partially overlapping ranges of movement.

16. System according to any of claims 12 to 15, wherein said machining tools (24, 26) are laser welding heads comprising laser focusing means.

17. System according to any of the claims 12 to 16, wherein said machining tools (24, 26) are laser cutting heads comprising laser focusing means.

18. System according to any of the claims 12 to 17, wherein said control means (16) comprises a microprocessor unit for running a control program..

19. System according to any of the claims 12 to 18, wherein said control means (16) comprises servo amplifiers for operating said robot arms.

20. System according to any of the claims 12 to 19, wherein said laser beam transmitting and switching means comprise fibre optic cables connecting said laser source to said machining tools and comprise an optical switch for transmitting said laser beam to either one of said machining tools..

## Patentansprüche

1. Verfahren zum Betreiben eines automatisierten Laserbearbeitungssystems, wobei das Laserbearbeitungssystem mindestens zwei Laserbearbeitungswerkzeuge (24, 26), die jeweils auf einem jeweiligen Roboterarm (20, 22) angebracht sind und rings um mindestens ein Werkstück (32, 32') beweglich sind, um daran Laserbearbeitungsvorgänge durchzuführen, sowie eine Laserquelle (12), die einen von den Laserbearbeitungswerkzeugen (24, 26) zu verwendenden Laserstrahl bereitstellt, umfasst, wobei das Verfahren Folgendes umfasst
gleichzeitiges Betreiben der Roboterarme (20, 22) zum Bewegen jedes der Laserbearbeitungswerkzeuge (24, 26) entlang jeweiliger vorbestimmter Arbeitswege (100, 200), um mehrere Bearbeitungsvorgänge an vorbestimmten Bearbeitungsstellen durchzuführen;
wobei der Laserstrahl von den mindestens zwei Bearbeitungswerkzeugen (24, 26) derart gemeinsam benutzt wird, dass der Laserstrahl abwechselnd zu einem oder dem anderen der mindestens zwei Bearbeitungswerkzeuge (24, 26) übertragen wird, während sie ihren jeweiligen Arbeitswegen (100, 200) zur Durchführung ihrer Bearbeitungsvorgänge folgen, und wobei, während der Laserstrahl zu einem der Bearbeitungswerkzeuge (24, 26) zur Durchführung eines Bearbeitungsvorgangs an einer vorgegebenen Bearbeitungsstelle übertragen wird, das andere der mindestens zwei Bearbeitungswerkzeuge (24, 26) zu einer nächsten Bearbeitungsstelle entlang seinem jeweiligen Arbeitsweg (100, 200) bewegt wird;
**dadurch gekennzeichnet, dass**
sobald ein Laserbearbeitungswerkzeug (24, 26) seinen Bearbeitungsvorgang beendet, der Laserstrahl zu dem anderen der mindestens zwei Bearbeitungswerkzeuge (24, 26), das eine nächste Bearbeitungsstelle erreicht, umgeschaltet wird; und
dass zum Zeitpunkt des Umschaltens des Laserstrahls von einem Bearbeitungswerkzeug (24, 26), das seinen Bearbeitungsvorgang beendet, zu einem Bearbeitungswerkzeug (24, 26), das eine nächste Bearbeitungsstelle erreicht, die durch das Umschalten des Laserstrahls von einem zum anderen der mindestens zwei Laserbearbeitungswerkzeuge (24, 26) verursachte vorübergehende Unterbrechung des Laserstrahls derart berücksichtigt wird, dass die Verfahrgeschwindigkeit des seine nächste Bearbeitungsstelle erreichenden Bearbeitungswerkzeugs (24, 26) derart angepasst wird, dass der Laserstrahl zu dem Zeitpunkt an dem Bearbeitungswerkzeug (24, 26) verfügbar ist, an welchem es die nächste Bearbeitungsstelle erreicht

2. Verfahren nach Anspruch 1, **dadurch gekennzeichnet, dass** der Laserstrahl abwechselnd zu jedem der Bearbeitungswerkzeuge (24, 26) übertragen wird.

3. Verfahren nach Anspruch 1 oder 2, **dadurch gekennzeichnet, dass** die Bearbeitungsstellen Abschnitten der Arbeitswege (100, 200) entsprechen, wobei die Bearbeitungswerkzeuge (24, 26) während der Bearbeitungsvorgänge entlang den Bearbeitungsstellen bewegt werden

4. Verfahren nach Anspruch 3, **dadurch gekennzeichnet, dass** die Bearbeitungsstellen lineare oder kurvenförmige Segmente sind

5. Verfahren nach irgendeinem der vorangehenden Ansprüche, **dadurch gekennzeichnet, dass**, während eines der Bearbeitungswerkzeuge (24, 26), zu welchem der Laserstrahl zur Durchführung eines Bearbeitungsvorgangs übertragen wird, durch seinen jeweiligen Roboterarm (20, 22) bei einer vorbestimmten Geschwindigkeit entlang einer Bearbeitungsstelle bewegt wird, die Verfahrgeschwindigkeit des anderen Bearbeitungswerkzeugs (24, 26) derart angepasst wird, dass es die nächste Bearbeitungsstelle auf seinem jeweiligen Arbeitsweg im Wesentlichen zu dem Zeitpunkt erreicht, wenn das erstgenannte Bearbeitungswerkzeug seinen Bearbeitungsvorgang beendet

6. Verfahren nach irgendeinem der vorangehenden Ansprüche, **dadurch gekennzeichnet, dass** der Betrieb der Roboterarme (20, 22) und die Steuerung der Bearbeitungswerkzeuge (24, 26) sowie die gemeinsame Benutzung des Lasers gemäß einem einzigen computergesteuerten Prozess gesteuert werden

7. Verfahren nach Anspruch 6, **dadurch gekennzeichnet, dass** einzelne Befehle an den computergesteuerten Prozess gemeinsam die Roboterarme (20, 22) anweisen

8. Verfahren nach irgendeinem der Ansprüche 1 bis 7, **dadurch gekennzeichnet, dass** die Bearbeitungswerkzeuge (24, 26) entlang jeweiligen Arbeitswegen (100, 200) an verschiedenen Abschnitten des Werkstücks (32, 32') betrieben werden

9. Verfahren nach irgendeinem der vorangehenden Ansprüche, **dadurch gekennzeichnet, dass** die Bearbeitungswerkzeuge (24, 26) entlang identischen, komplementären oder teilweise überlappenden Arbeitswegen betrieben werden

10. Verfahren nach irgendeinem der vorangehenden Ansprüche, **dadurch gekennzeichnet, dass** der Laserbearbeitungsvorgang ein Laserschweißvorgang oder ein Laserschneidvorgang ist

11. Verfahren nach irgendeinem der vorangehenden Ansprüche, **dadurch gekennzeichnet, dass** das Werkstück (32') ein zugesammengebautes Fahrzeugkarosserieteil ist

12. Automatisiertes Laserbearbeitungssystem umfassend:
eine Laserquelle (12), die einen Laserstrahl bereitstellt;
mindestens zwei Laserbearbeitungswerkzeuge (24, 26), die jeweils auf einem jeweiligen Roboterarm (20, 22) angebracht sind;
den Laserstrahl übertragende und umschaltende Mittel zur selektiven Übertragung des Laserstrahls zu einem der Laserbearbeitungswerkzeuge (24, 26); und
ein Steuerungsmittel (16), das für das Betreiben der mindestens zwei Roboterarme ausgelegt ist, um die Bearbeitungswerkzeuge entlang jeweiligen vorbestimmten Arbeitswegen zu bewegen, um mehrere Laserbearbeitungsvorgänge an vorbestimmten Bearbeitungsstellen durchzuführen,
wobei das Steuerungsmittel ferner derart ausgelegt ist, dass es das Umschalten des Laserstrahls derart steuert, dass er von den mindestens zwei Bearbeitungswerkzeugen (24, 26) in einer solchen Weise gemeinsam benutzt wird, dass der Laserstrahl abwechselnd zu einem oder dem anderen der mindestens zwei Bearbeitungswerkzeuge übertragen wird, während sie gleichzeitig ihren jeweiligen Arbeitswegen (100, 200) zur Durchführung ihrer Bearbeitungsvorgänge folgen, und dass, während der Laserstrahl zu einem der Bearbeitungswerkzeuge (24, 26) zur Durchführung eines Bearbeitungsvorgangs an einer vorgegebenen Bearbeitungsstelle übertragen wird,
das andere der mindestens zwei Bearbeitungswerkzeuge zu einer nächsten Bearbeitungsstelle entlang seinem jeweiligen Arbeitsweg bewegt wird,
**dadurch gekennzeichnet, dass**
das Steuerungsmittel derart ausgelegt ist, dass, sobald ein Laserbearbeitungswerkzeug (24, 26) seinen Bearbeitungsvorgang beendet, der Laserstrahl zu dem anderen der mindestens zwei Bearbeitungswerkzeuge, das eine nächste Bearbeitungsstelle erreicht, umgeschaltet wird; und
derart, dass zum Zeitpunkt des Umschaltens des Laserstrahls von einem Bearbeitungswerkzeug (24, 26), das seinen Bearbeitungsvorgang beendet, zu einem Bearbeitungswerkzeug, das eine nächste Bearbeitungsstelle erreicht, die durch das Umschalten des Laserstrahls von einem zum anderen der mindestens zwei Laserbearbeitungswerkzeuge (24, 26) verursachte vorübergehende Unterbrechung des Laserstrahls derart berücksichtigt wird, dass die Verfahrgeschwindigkeit des seine nächste Bearbeitungsstelle erreichenden Bearbeitungswerkzeugs derart angepasst wird, dass der Laserstrahl zu dem Zeitpunkt an dem Bearbeitungswerkzeug verfügbar ist, an welchem es die nächste Bearbeitungsstelle erreicht

13. System nach Anspruch 12, wobei die Roboterarme (20, 22) rings um mindestens ein Werkstück (32, 32') derart angeordnet sind, dass sie eine Arbeitsstation (30) bilden, und wobei das System Haltemittel zum Halten des mindestens einen Werkstücks (32, 32') umfasst.

14. System nach Anspruch 12 oder 13, wobei die Roboterarme (20, 22) mehrgelenkige Robotergelenkarme sind

15. System nach irgendeinem der Ansprüche 12 bis 14, wobei die Roboterarme (20, 22) derart angeordnet sind, dass sie zumindest teilweise überlappende Bewegungsbereiche aufweisen

16. System nach irgendeinem der Ansprüche 12 bis 15, wobei die Bearbeitungswerkzeuge (24, 26) Laserschweißköpfe sind, die Laserfokussiermittel umfassen

17. System nach irgendeinem der Ansprüche 12 bis 16, wobei die Bearbeitungswerkzeuge (24, 26) Laserschneidköpfe sind, die Laserfokussiermittel umfassen

18. System nach irgendeinem der Ansprüche 12 bis 17, wobei das Steuerungsmittel (16) eine Mikroprozessoreinheit zum Ausführen eines Steuerungsprogramms umfasst.

19. System nach irgendeinem der Ansprüche 12 bis 18, wobei das Steuerungsmittel (16) Servoverstärker zum Betreiben der Roboterarme umfasst

20. System nach irgendeinem der Ansprüche 12 bis 19, wobei die den Laserstrahl übertragenden und umschaltenden Mittel Lichtleitkabel, die die Laserquelle mit den Bearbeitungswerkzeugen verbinden, umfassen und einen optischen Schalter zur Übertragung des Laserstrahls zu jedem der beiden Bearbeitungswerkzeuge umfassen

## Revendications

1. Procédé de commande d'un système automatisé d'usinage au laser, ledit système d'usinage au laser comprenant au moins deux outils d'usinage au laser (24, 26) montés chacun sur un bras de robot (20, 22) respectif et étant mobiles autour d'au moins une pièce à usiner (32, 32') pour exécuter des processus d'usinage au laser sur celle-ci, et une source de laser (12) délivrant un faisceau laser destiné à être utilisé par lesdits outils d'usinage au laser (24, 26), ledit procédé comprenant :
l'utilisation simultanée desdits bras de robot (20, 22) pour déplacer chacun desdits outils d'usinage au laser (24, 26) le long de chemins de travail (100, 200) prédéterminés respectifs pour exécuter une pluralité de processus d'usinage en des emplacements d'usinage prédéterminés ;
dans lequel ledit faisceau laser est partagé par lesdits au moins deux outils d'usinage (24, 26) de telle manière que ledit faisceau laser est transmis tour à tour à l'un ou à l'autre desdits au moins deux outils d'usinage (24, 26) alors qu'ils suivent leurs chemins de travail (100, 200) respectifs pour exécuter leurs processus d'usinage, et dans lequel, alors que ledit faisceau laser est en cours de transmission à l'un desdits outils d'usinage (24, 26) pour exécuter un processus d'usinage en un emplacement d'usinage donné, l'autre desdits au moins deux outils d'usinage (24, 26) est déplacé jusqu'à un emplacement d'usinage suivant le long de son chemin de travail (100, 200) respectif ;
**caractérisé en ce que**
dès qu'un outil d'usinage (24, 26) termine son processus d'usinage, ledit faisceau laser est commuté sur l'autre desdits au moins deux outils d'usinage (24, 26) qui atteint un emplacement d'usinage suivant ; et
**en ce que**, au moment de la commutation dudit faisceau laser d'un outil d'usinage (24, 26) terminant son processus d'usinage sur un outil d'usinage (24, 26) atteignant un emplacement d'usinage suivant, l'interruption temporaire du faisceau laser causée par la commutation dudit faisceau laser de l'un à l'autre desdits au moins deux outils d'usinage au laser (24, 26) est prise en compte pour adapter la vitesse de déplacement dudit outil d'usinage (24, 26) atteignant son emplacement d'usinage suivant, de telle sorte que ledit faisceau laser est disponible au niveau dudit outil d'usinage (24, 26) au moment où il atteint ledit emplacement d'usinage suivant.

2. Procédé selon la revendication 1, **caractérisé en ce que** ledit faisceau laser est transmis de manière alternée à chacun desdits outils d'usinage (24, 26)

3. Procédé selon la revendication 1 ou 2, **caractérisé en ce que** lesdits emplacements d'usinage correspondent à des parties desdits chemins de travail (100, 200), lesdits outils d'usinage (24, 26) étant déplacés le long desdits emplacements d'usinage pendant des processus d'usinage

4. Procédé selon la revendication 3, **caractérisé en ce que** lesdits emplacements d'usinage sont des segments linéaires ou curvilignes

5. Procédé selon l'une quelconque des revendications précédentes, **caractérisé en ce que**, alors que l'un desdits outils d'usinage (24, 26) sur lequel ledit faisceau laser est en cours de transmission pour exécuter un processus d'usinage est déplacé le long d'un emplacement d'usinage par son bras de robot (20, 22) respectif à une vitesse prédéterminée, la vitesse de déplacement de l'autre outil d'usinage (24, 26) est adaptée de telle sorte qu'il atteint l'emplacement d'usinage suivant sur son chemin de travail respectif essentiellement au moment où l'outil d'usinage précédent termine son processus d'usinage

6. Procédé selon l'une quelconque des revendications précédentes, **caractérisé en ce que** le fonctionnement desdits bras de robot (20, 22) et la commande desdits outils d'usinage (24, 26), ainsi que ledit partage du laser, sont commandés selon un processus unique commandé par ordinateur

7. Procédé selon la revendication 6, **caractérisé en ce que** des instructions uniques audit processus commandé par ordinateur commandent conjointement les bras de robot (20, 22)

8. Procédé selon l'une quelconque des revendications 1 à 7, **caractérisé en ce que** lesdits outils d'usinage (24, 26) sont utilisés le long de chemins de travail (100, 200) respectifs sur différentes parties de ladite pièce à usiner (32, 32')

9. Procédé selon l'une quelconque des revendications précédentes, **caractérisé en ce que** lesdits outils d'usinage (24, 26) sont utilisés le long de chemins de travail identiques, complémentaires ou se chevauchant partiellement

10. Procédé selon l'une quelconque des revendications précédentes, **caractérisé en ce que** ledit processus d'usinage au laser est un processus de soudage au laser ou un processus de découpe au laser

11. Procédé selon l'une quelconque des revendications précédentes, **caractérisé en ce que** ladite pièce à usiner (32') est une partie assemblée de carrosserie de véhicule

12. Système automatisé d'usinage au laser comprenant
une source de laser (12) délivrant un faisceau laser ;
au moins deux outils d'usinage au laser (24, 26) montés chacun sur un bras de robot (20, 22) respectif ;
un moyen de transmission et de commutation de faisceau laser pour sélectivement transmettre ledit faisceau laser à l'un desdits outils d'usinage au laser (24, 26) ; et
un moyen de commande (16) conçu pour faire fonctionner lesdits au moins deux bras de robot pour déplacer lesdits outils d'usinage le long de chemins de travail prédéterminés respectifs pour exécuter une pluralité de processus d'usinage au laser en des emplacements d'usinage prédéterminés,
dans lequel ledit moyen de commande est en outre conçu pour commander la commutation dudit faisceau laser de telle sorte qu'il est partagé par lesdits au moins deux outils d'usinage (24, 26) de telle manière que ledit faisceau laser est transmis tour à tour à l'un ou à l'autre desdits au moins deux outils d'usinage alors qu'ils suivent simultanément leurs chemins de travail (100, 200) respectifs pour exécuter leurs processus d'usinage, et, alors que ledit faisceau laser est en cours de transmission à l'un desdits outils d'usinage (24, 26) pour exécuter un processus d'usinage en un emplacement d'usinage donné, l'autre desdits au moins deux outils d'usinage est déplacé jusqu'à un emplacement d'usinage suivant le long de son chemin de travail respectif
**caractérisé en ce que**
ledit moyen de commande est conçu de telle sorte que, dès qu'un outil d'usinage au laser (24, 26) termine son processus d'usinage, ledit faisceau laser est commuté sur l'autre desdits au moins deux outils d'usinage qui atteint un emplacement d'usinage suivant ; et
de telle sorte que, au moment de la commutation dudit faisceau laser d'un outil d'usinage (24, 26) terminant son processus d'usinage sur un outil d'usinage atteignant un emplacement d'usinage suivant, l'interruption temporaire du faisceau laser causée par la commutation dudit faisceau laser de l'un à l'autre desdits au moins deux outils d'usinage au laser (24, 26) est prise en compte pour adapter la vitesse de déplacement dudit outil d'usinage atteignant son emplacement d'usinage suivant, de telle sorte que ledit faisceau laser est disponible au niveau dudit outil d'usinage au moment où il atteint ledit emplacement d'usinage suivant

13. Système selon la revendication 12, dans lequel lesdits bras de robot (20, 22) sont agencés autour d'au moins une pièce à usiner (32, 32') de manière à former une station de travail (30) et dans lequel ledit système comprend un moyen de maintien pour maintenir ladite au moins une pièce à usiner (32, 32')

14. Système selon la revendication 12 ou 13, dans lequel lesdits bras de robot (20, 22) sont des bras de robot articulés à articulations multiples

15. Système selon l'une quelconque des revendications 12 à 14, dans lequel lesdits bras de robot (20, 22) sont agencés de manière à avoir des plages de mouvement se chevauchant au moins partiellement.

16. Système selon l'une quelconque des revendications 12 à 15, dans lequel lesdits outils d'usinage (24, 26) sont des têtes de soudage au laser comprenant un moyen de focalisation de laser

17. Système selon l'une quelconque des revendications 12 à 16, dans lequel lesdits outils d'usinage (24, 26) sont des têtes de découpe au laser comprenant un moyen de focalisation de laser

18. Système selon l'une quelconque des revendications 12 à 17, dans lequel ledit moyen de commande (16) comprend une unité de microprocesseur pour exécuter un programme de commande

19. Système selon l'une quelconque des revendications 12 à 18, dans lequel ledit moyen de commande (16) comprend des servo-amplificateurs pour faire fonctionner lesdits bras de robot

20. Système selon l'une quelconque des revendications 12 à 19, dans lequel ledit moyen de transmission et de commutation de faisceau laser comprend des câbles de fibres optiques connectant ladite source de laser auxdits outils d'usinage et comprend un commutateur optique pour transmettre ledit faisceau laser à l'un ou l'autre desdits outils d'usinage
